# EUROPEAN PATENT SPECIFICATION

(11) **EP 4 559 771 B1**
(45) Date of publication and mention of the grant of the patent: **24.06.2026**
(21) Application number: 23212074.1
(22) Date of filing: 24.11.2023
(51) Int. Cl.: B60W 30/18, B60W 50/00, B60W 60/00

(54) **METHOD AND SYSTEM FOR PRECAUTIONARY PLANNING FOR A VEHICLE**
VERFAHREN UND SYSTEM ZUR VORAUSSCHAUENDEN PLANUNG FÜR EIN FAHRZEUG
PROCÉDÉ ET SYSTÈME DE PLANIFICATION DE MESURES POUR UN VÉHICULE

(43) Date of publication of application: 28.05.2025
(73) Proprietor: Zenseact AB, 417 56 Göteborg (SE)
(72) Inventor: KHORSAND VAKILZADEH, Majid, 417 62 Göteborg (SE); FEI, Zhennan, 417 55 Göteborg (SE)
(74) Representative: Zacco Sweden AB

(56) References cited:
- EP-A1- 4 186 770
- EP-A1- 4 250 266
- DE-A1- 102020 130 516

## Description

### TECHNICAL FIELD

The present invention relates to automotive technology, and in particular to methods, systems, and other related aspects for precautionary planning for a vehicle having an Automated Driving System (ADS).

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS).

In a not too distant future, ADS solutions are expected to have found their way into a majority of the new cars being put on the market. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

Nevertheless, while an ADS is envisioned to be more performant than a human driver in the future, there is still a need for solutions that improve the safety of the ADS.

EP 4 250 266 A1 discloses a driving control apparatus for a vehicle provided with an automated operation device for executing automated driving by remote monitoring and control has a risk mitigation function (RMF) that executes risk mitigation control for stopping the vehicle at a target stopping location S in a case in which the continuation of remote monitoring and control has become difficult. The automated operation device is configured to: execute a search for target stopping location candidates on the basis of location information about the vehicle and map information during the automated driving in preparation for RMF activation; and in a case in which the RMF is activated in the vicinity of an intersection, select, as the target stopping location S, a target stopping location candidate that the vehicle can reach without cutting across an oncoming lane at the intersection from among a plurality of target stopping location candidates including a target stopping location candidate located on a path different from a target path PA of the automated driving.

### SUMMARY

The present invention seeks to mitigate, alleviate or eliminate one or more deficiencies and disadvantages in the prior art to address various problems relating to potential safety risks that a vehicle and its occupants could be exposed due upon failure of the ADS.

In particular, it is an object of the present invention to provide a method, a system, and other relates aspects for precautionary planning so to reduce or eliminate the risk of the vehicle ending up in a high-risk state due to unexpected failures of the ADS of the vehicle and/or due to unexpected changes in the surrounding environment of the vehicle.

Various aspects and embodiments of the present invention are described below.

A first aspect of the present invention, in line with independent claim 1, comprises a computer-implemented method for precautionary planning for a vehicle having an Automated Driving System, ADS, function having an Operational Design Domain (ODD). The method comprises obtaining data comprising information about a high-risk state for a vehicle along a route to be travelled by the vehicle. The high-risk state is defined based on a geographical area along the route to be travelled and a set of potential states of the vehicle within the geographical area. The method further comprises obtaining data comprising information about an Undesired Unexpected ODD (UUODD) exit area along the route to be travelled by the vehicle based on a current trajectory of the vehicle and a nominal Minimal Risk Manoeuvre (MRM) configuration of the vehicle. The UUODD exit area is defined based on a likelihood that the vehicle will enter the high-risk state in response to the MRM being executed while the vehicle is in the UUODD exit area. Moreover, the method comprises controlling the vehicle based on the UUODD exit area in order to reduce the likelihood that the vehicle enters the high-risk state.

A second aspect of the present invention, in line with independent claim 10, comprises a computer program product comprising instructions which, when the program is executed by a computing device (of a vehicle), causes the computing device to carry out the method according to any one of the embodiments disclosed herein. With this aspect of the present invention, similar advantages and preferred features are present as in the other aspects.

A third aspect of the present invention, in line with independent claim 11, comprises a (non-transitory) computer-readable storage medium comprising instructions which, when executed by a computing device (of a vehicle), causes the computing device to carry out the method according to any one of the embodiments disclosed herein. With this aspect of the present invention, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the present invention, in line with independent claim 12, comprises a system for precautionary planning for a vehicle having an Automated Driving System, ADS, function having an Operational Design Domain (ODD). The system comprises control circuitry configured to obtain data comprising information about a high-risk state for a vehicle along a route to be travelled by the vehicle. The high-risk state is defined based on a geographical area along the route to be travelled and a set of potential states of the vehicle within the geographical area. The control circuitry is further configured to obtain data comprising information about an Undesired Unexpected ODD (UUODD) exit area along the route to be travelled by the vehicle based on a current trajectory of the vehicle and a nominal Minimal Risk Manoeuvre (MRM) configuration of the vehicle. The unplanned ODD exit area is defined based on a likelihood that the vehicle will enter the high-risk state in response to the MRM being executed while the vehicle is in the UUODD exit area. The control circuitry is further configured to control the vehicle based on the UUODD exit area in order to reduce the likelihood that the vehicle enters the high-risk state. With this aspect of the present invention, similar advantages and preferred features are present as in the other aspects.

A fifth aspect of the present invention, in line with claim 15, comprises a vehicle comprising a system according to any one of the embodiments disclosed herein. With this aspect of the present invention, similar advantages and preferred features are present as in the previously discussed aspects.

An advantage of some embodiments is that the general risk exposure of an ADS may be reduced, and in particular in situations where the ADS experiences an unexpected failure (i.e., an ODD exit).

An advantage of some embodiments is that the performance of the ADS's fall-back functionality that is triggered by unexpected ODD exits may be improved in terms of safety.

An advantage of some embodiments is that the general road safety for other road users may be improved.

Preferred embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

The above aspects, features and advantages of the present invention, will be more fully appreciated by reference to the following illustrative and non-limiting detailed description of example embodiments of the present invention, when taken in conjunction with the accompanying drawings, in which:
Fig. 1 is a schematic flowchart representation of a method for precautionary planning for a vehicle having an Automated Driving System, ADS, function having an Operational Design Domain, ODD in accordance with some embodiments.
Fig. 2 is a schematic top-view illustration of a road scenario for a vehicle travelling along a route in accordance with some embodiments.
Fig. 3 is a schematic diagram of a vehicle comprising a system for precautionary planning for a vehicle in accordance with some embodiments.

### DETAILED DESCRIPTION

The herein present invention will now be described in detail with reference to the accompanying drawings, in which some example embodiments of the present invention are shown. The present invention may, however, be embodied in other forms and should not be construed as limited to the disclosed example embodiments. The disclosed example embodiments are provided to fully convey the scope of the present invention to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present invention is described in terms of a method, it may also be embodied in system comprising one or more processors, one or more memories coupled to the one or more processors, where computer code is loaded to implement the method. For example, the one or more memories may store one or more computer programs that causes the system to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The term "Operational Design Domain" (ODD) may be understood as the specific operating conditions and environments in which an ADS or autonomous vehicle is intended to function safely and effectively. It defines the boundaries within which the autonomous system is designed and validated to operate. The ODD conditions may be divided into external ODD conditions and internal ODD conditions. Here, the external ODD conditions may refer to external factors or environmental elements that impact the operation of the automated driving system. The internal ODD conditions may refer to the capabilities and limitations inherent to the autonomous vehicle or the ADS itself.

The external ODD conditions may include geographical limits defining the geographic area or region where the ADS is intended to operate, such as urban areas, highways, or specific cities. The external ODD conditions may include environmental factors including conditions like weather (rain, snow, fog, etc.), lighting conditions (daylight, night-time), and various terrains (mountainous, urban, rural) that affect the ADS's sensors and perception systems. The external ODD conditions may include road infrastructure comprising the types of roads, lanes, intersections, signage, and road markings the ADS is designed to navigate. The external ODD conditions may include traffic conditions comprising variations in traffic density, behaviour of other vehicles, pedestrians, and cyclists.

The internal ODD conditions may include sensor capability parameters, such as e.g., the range, accuracy, and reliability of sensors such as cameras, LiDAR, radar, and other perception systems. The internal ODD conditions may include processing and decision-making parameters comprising computing power and algorithms used for interpreting sensor data, making driving decisions, and controlling the vehicle. The internal ODD conditions may include functional capability parameters comprising the specific capabilities of the ADS, including its ability to handle complex traffic situations, navigate intersections, change lanes, park, and perform emergency manoeuvres.

The term "precautionary planning" may be understood as functions or systems of the ADS for anticipating and planning for potential risks or situations that may arise during operation. In more detail, precautionary planning in the context of Automated Driving Systems may involve a meticulous and systematic approach to identifying, mitigating, and preparing for potential risks and uncertainties associated with ADS-equipped vehicles' operation. Precautionary planning may for example involve, continuously assessing the driving environment, analysing data from sensors and other sources to predict potential hazards, such as pedestrians, cyclists, erratic drivers, road construction, or adverse weather conditions. It may further involve prioritization of safety in decision-making. Algorithms determine how the vehicle should respond in various scenarios to minimize risks, whether that means braking, changing lanes, or adjusting speed to avoid potential collisions. It may further involve designing redundancy into critical systems and implementing fail-safe mechanisms. This ensures that if a primary system malfunctions, there are backup systems in place to maintain control or bring the vehicle to a safe stop. Moreover, precautionary planning may involve adherence to regulations and standards, continuous monitoring and adaptation, ethical considerations, and so forth. In essence, "precautionary planning" for an ADS may be understood as a comprehensive approach to anticipate, analyse, and mitigate risks associated with autonomous driving, aiming to ensure the safety, reliability, and ethical operation of these vehicles on the road.

Accordingly, embodiments disclosed herein may be understood as a precautionary planning functionality, or a sub-function of the precautionary planning stack.

### Overview

An ADS at SAE Level 4 offers the feature of unsupervised autonomous driving (AD) to enhance a comfort and convenience experience by allowing the driver to engage in non-driving-related tasks. However, such high automation (i.e., SEA Level 4 ADS) can only be operated under certain conditions. As mentioned, these conditions are generally referred to as the Operational Design Domain (ODD) of the ADS or a feature/function thereof.

When vehicle is within the ODD, i.e., when the vehicle and the environment fulfil the applicable ODD conditions, the associated ADS functions may be activated (e.g., upon request by the driver) such that the Dynamic Driving Task (DDT) can be executed by the ADS. However, after activation and once a condition of the ODD is failed or otherwise unsatisfied, the DDT will be interrupted as the ADS has "exited" its ODD. Preferably, the ADS function should be deactivated before the ODD exit. However, depending on which ODD conditions was/were violated (different condition violations are associated with different severities), the deactivation mechanism of the ADS function is generally performed in one of the following two ways.

The first alternative is a so-called "planned ODD exit". Here, the ADS will issue a prompt requesting a handover to take over the DDT as the vehicle approaches the ODD exit. If the driver would ignore the request or fail to properly respond to the request within a certain time limit (typically 10-20 seconds), a DDT fall-back condition is fulfilled, which triggers the Minimal Risk Manoeuvre (MRM) functionality to bring the host vehicle to stop in lane or on the shoulder lane if possible. These situations may typically arise when the ADS detects that the vehicle is approaching an environment not fulfilling the ODD. For example, the ODD may require that the road should have barriers on both sides, while the HD-map data or sensors indicate that the barrier is missing 500m ahead of the vehicle.

The second alternative is a so-called "unplanned ODD exit". Here, the ADS will execute the MRM immediately without any handover request. These situations may typically arise when the ADS detects that one or more sensors have been contaminated or otherwise are non-functional, that there is a software or hardware failure within the ADS, that a connection has been lost to a control tower, or the like. However, these situations may also arise due to external factors (e.g., sudden changes within the environment) such as sudden change of weather, road conditions, or traffic situations where the changes are outside of the ODD. An ADS function or ADS feature may as mentioned be understood as a specific function or feature of the entire ADS stack. In particular, in the present context, the ADS function is assumed to be associated with an MRM functionality that is executed in the event of an unplanned ODD exit.

Embodiments of the present invention may be understood as solutions for mitigating potential risk associated with the above-mentioned "unplanned ODD exits". For example, some embodiments herein aim to reduce the risk or likelihood for the vehicle to end up in a high-risk state, posing a safety-concern for the vehicle and its occupants, in the event of an "unplanned ODD exit".

In the present context, an "MRM" function may be understood as a "back-up stop" or "safe stop" function of an ADS that is configured to bring the vehicle to a "safe state" should it be executed. In general, this means that once executed, the MRM function aims to bring the vehicle to standstill as quickly as possible without colliding with any other objects. In many cases this may lead to the vehicle stopping in positions that may be "safe" on one hand (i.e., no collision up until reaching that stop), but is nevertheless associated with high-risk in view of other road users. An illustrative example may be stopping at the merging section of a highway on-ramp. The MRM may accordingly be able to bring the vehicle to standstill in a safe manner, however, standing still at that particular position may be associated with an elevated risk for collisions with other road users. At the very least, it may cause large disturbances in traffic.

### Embodiments

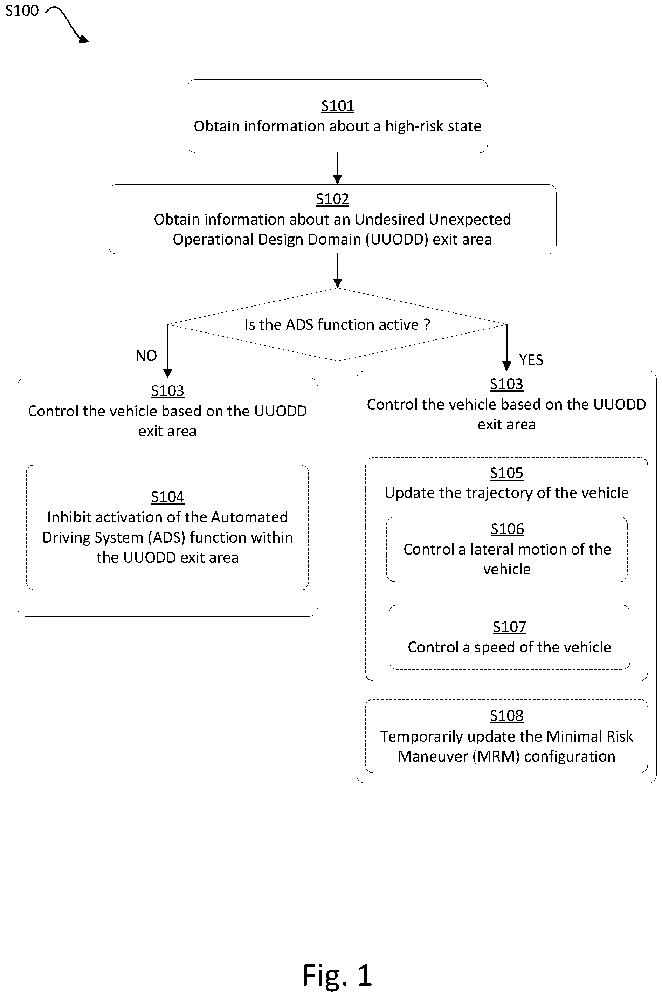

Fig. 1 illustrates a schematic flowchart representation of a method 100 for precautionary planning for a vehicle having an Automated Driving System (ADS) function in accordance with some embodiments. The ADS function has a defined Operational Design Domain (ODD), for which it is designed and verified to operate. The method S100 is preferably a computer-implemented method S100, performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S101 data comprising information about a high-risk state for the vehicle along a route to be travelled by the vehicle. The high-risk state is in turn defined based on a geographical area along the route to be travelled and a set of potential states of the vehicle within the geographical area. Accordingly, a "high-risk state" may be considered as a potential situation that the vehicle may be exposed to which poses a risk for the vehicle and its occupants and/or for other road users. For example, a high-risk state may be the vehicle at standstill at position (X, Y) (vehicle state) within a lane merging area following an on-ramp to a highway (geographical area). Another example may be the vehicle at standstill at position (A, B) (vehicle state) in a single lane near road works (geographical area). Thus, the "vehicle state" (e.g., standstill at a specific position) is not high-risk per se, and the geographical area (lane merger area) is not high-risk per se, however, particular combinations of the two form a high-risk state. Accordingly, the "set of potential states" may comprise a vehicle position (e.g., geographical coordinates such as GNSS coordinates) and a vehicle speed (e.g., 0 km/h). However, even if most of the examples relate to a potential vehicle states where the vehicle's speed is zero, it may also involve other speed values and vehicle positions' such that traversing a certain area at a speed below a speed value is considered to be a "high-risk state". Moreover, the "set of potential states" may comprise further parameters such as heading angle, steering angle, status of headlights/taillights, and so forth. For example, stopping within a geographical area with a certain steering angle may be considered as a "high-risk state" while stopping within the same geographical area with a "straight" steering angle may not be considered a high-risk state.

Accordingly, the "high-risk states" may be rule-based or heuristically determined based on a set of predefined rules. For example, vehicle at standstill at every lane merging area following an on-ramp to a highway may be concluded as "high-risk states". The high-risk states may be defined in map data (e.g., HD Map data) accessible by the ADS, or they may be detected/determined in real-time based on map data and/or sensor data.

A route to be travelled by the vehicle may be understood as a planned or expected course that a vehicle is intended to follow from a starting or current point to a destination. As defined herein, the route to be travelled by the vehicle may, but not necessarily, include a more granular representation of the vehicle's intended course, or in other words, the route may include a path to be travelled by the vehicle. In general, the "route to be travelled by the vehicle" may be understood as the intended traversal of the vehicle, and it may be derived from the vehicle's current position, heading direction, and optionally destination. It may however also be derived from a planned path of the vehicle as e.g., output by the ADS's path planning functionality.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a route of the vehicle may encompass determining or computing a route of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

The method S100 further comprises obtaining S102 data comprising information about an Undesired Unexpected ODD (UUODD) exit area along the route to be travelled by the vehicle. The UUODD exit area is based on a current trajectory of the vehicle and a nominal Minimal Risk Manoeuvre (MRM) configuration of the vehicle. In more detail, the UUODD exit area is defined based on a likelihood that the vehicle will enter the high-risk state in response to a Minimal Risk Manoeuvre (MRM) (under a nominal configuration) being executed while the vehicle is in the UUODD exit area. In this context, a "likelihood" that the vehicle will enter the high-risk state may for example be a likelihood exceeding a likelihood value (or likelihood threshold), such as e.g., 50%, 60%, 70%, 80%, or 90%. However, other likelihood values are feasible depending on specific realizations and specifications. The likelihood may for example be computed based on a general vehicle motion model taking into account the current trajectory of the vehicle and the nominal MRM configuration. However, in some embodiments the "likelihood" is just that there is a non-zero likelihood that the vehicle will enter the high-risk state should the MRM be executed within the UUODD exit area. In other words, if there is any risk (>0%) that the vehicle will enter the high-risk state should the MRM be executed within the UUODD exit area, then that is accounted for in the definition of the UUODD exit area.

Stated differently, once the high-risk state is defined, one can compute an UUODD exit area based on a likelihood that the vehicle will enter the high-risk state should the MRM be executed while the vehicle is within the UUODD exit area. Accordingly, the UUODD exit area may be understood as a geographical area within which an "unplanned ODD exit" is undesirable as it is likely to lead to that the vehicle ends up in a high-risk state. This is in contrast to other "unplanned ODD exits", where the MRM execution is unlikely to lead to that the vehicle enters or ends up in a "high-risk state".

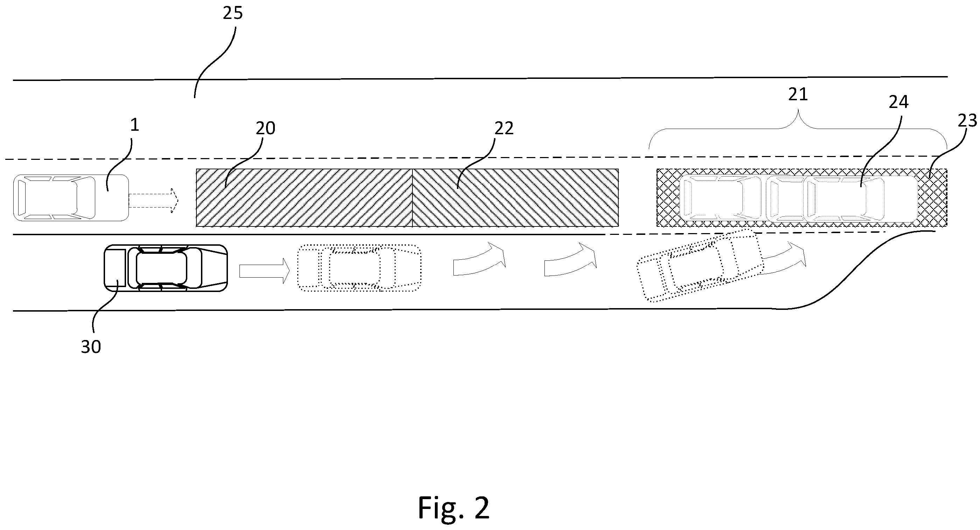

The extension of the UUODD exit area may accordingly be defined based on the geographical extension of the geographical area comprised in the high-risk state, the current trajectory (e.g., speed and heading) of the vehicle, and the nominal MRM configuration (i.e., predefined deceleration and manoeuvring capability). Further details and examples are provided in reference to Fig. 2 below.

The method S100 further comprises controlling S103 the vehicle based on the UUODD exit area in order to reduce the likelihood that the vehicle enters the high-risk state. The method S100 may comprise controlling S103 the vehicle, in response to the likelihood being above a likelihood value, so to reduce the likelihood that the vehicle enters the high-risk state.

For example, in response to the likelihood value being equal to or more than a 50% likelihood that the vehicle will enter the high-risk state should the MRM be executed in the UUODD exit area, then the method S100 may comprise controlling S103 the vehicle to reduce the likelihood that the vehicle enters the high-risk state.

As mentioned, some embodiments disclosed herein can be understood as a sub-routine in the precautionary planning function of the ADS. First the high-risk state indicating the geographical area representing a safety risk for the vehicle and/or other road users is obtained 101. Next, the UUODD exit area is obtained based on the vehicle dynamics and the nominal MRM configuration, whereupon the vehicle is controlled so to reduce the likelihood of the vehicle entering the high-risk state.

The controlling S103 of the vehicle to reduce the likelihood of the vehicle entering the high-risk state may be realized in different forms. In particular, the controlling S103 may depend on whether or not the ADS function is active or inactive (albeit available for activation). As readily understood, it is always assumed that the vehicle is within an ODD of the ADS function as the precautionary planning is executed.

Accordingly, in some embodiments, the controlling S103 of the vehicle comprises, in response to the ADS function being currently inactive, inhibiting S104 activation of the ADS function within the UUODD exit area. Accordingly, if the ADS function is inactive, albeit available for activation, in order to reduce the risk of the vehicle entering or ending up in the high-risk state, the function is inhibited S104 for activation. Otherwise, a situation may arise where the ADS function is activated within the UUODD exit area, leaving no time for precautionary planning, whereupon a sensor may fail and an unplanned ODD exit consequently occurs, causing the MRM to execute and the vehicle may be brought to standstill in a disadvantageous location. In some embodiments, the inhibition S104 of activation of the ADS function comprises inhibiting activation of the ADS function while the vehicle is within the UUODD exit area and a set distance prior to entering the UUODD exit area. For example, the inhibition may be executed 1, 2, 3, or 5 seconds prior to the expected entry into the UUODD exit area. Alternatively, the inhibition may be executed 10, 20, 50, 100, or 500 meters prior to the expected entry into the UUODD exit area.

Moreover, in some embodiments, the controlling S103 of the vehicle comprises, in response to the ADS function being currently active, updating S105 the trajectory of the vehicle in order to reduce the likelihood that the vehicle enters the high-risk state should the MRM be executed while the vehicle is in the UUODD exit area. In some cases, the trajectory may be updated S105 so to avoid the UUODD exit area completely (thereby eliminating the risk of entering the high-risk state should the MRM be executed while the vehicle is within the UUODD exit area) or to adapt trajectory otherwise (e.g., changing speed) to at least reduce the risk.

In some embodiments, the updating S105 of a trajectory of the vehicle comprises controlling S106 a lateral motion of the vehicle in order to reduce the likelihood that the vehicle enters the high-risk state should the MRM be executed while the vehicle is in the UUODD exit area. The controlling S106 of the lateral motion of the vehicle may for example switching a lane of the vehicle assuming that another lane is available and then further that the switching to a different lane does not impose other safety-related risks for the vehicle. In some embodiments, the updating S106 of a trajectory of the vehicle comprises executing a lane-change function of the ADS so to switch to a neighbouring lane different from the current lane of travel of the vehicle. Here, the lane-change function of the ADS is assumed to consider and handle any safety-relate risks associated with the lane change.

In some embodiments, the updating S105 of a trajectory of the vehicle comprises controlling S107 a speed of the vehicle (while the vehicle is within the UUODD exit area) in order to reduce the likelihood that the vehicle enters the high-risk state should the MRM be executed while the vehicle is in the UUODD exit area. The controlling S107 of the speed of the vehicle may for example comprise, increasing or reducing the speed of the vehicle. In more detail, by reducing the speed while the vehicle is in the UUODD exit area, the vehicle may "undershoot" (i.e., stop before the geographical area of the high-risk state) should the MRM be executed. Similarly, by increasing the speed while the vehicle is in the UUODD exit area, the vehicle may "overshoot" (i.e., stop after the geographical area of the high-risk state) should the MRM be executed.

Moreover, in some embodiments, the controlling S103 the vehicle comprises, in response to the ADS function being currently active, temporarily updating S108 the MRM configuration to a different configuration than the nominal MRM configuration in order to reduce the likelihood that the vehicle enters the high-risk state should the MRM be executed while the vehicle is in the UUODD exit area. In other words, instead of adjusting S105 the trajectory of the vehicle one could instead re-configure the MRM so to reduce the likelihood that the vehicle enters the high-risk state should the MRM be executed while the vehicle is in the UUODD exit area. For example, one could adjust S108 the MRM configuration by for example allowing for a higher (maximum) deceleration (e.g., from -0,5g to -1,0g) or limit the (maximum) deceleration (e.g., from -0,5g to -0,25g). By allowing for a higher deceleration the vehicle could be brought to standstill before the geographical area of the high-risk state (i.e., undershoot). Analogously, by limiting or reducing the (maximum deceleration) the vehicle could be brought to standstill after the geographical area of the high-risk state (i.e., overshoot). The temporary MRM configuration update S108 may for example be used when the vehicle's trajectory cannot be adjusted without increasing the risk or without violating some traffic regulation. The term "temporary" in reference to the adjustment/update S108 of the MRM configuration may be understood as that the adjusted/updated S108 configuration is only applied for a limited duration of time. For example, once the vehicle has passed the UUODD exit area or the geographical area of the high-risk state, the MRM configuration may be returned to the nominal MRM configuration. Thus, in some embodiments, the method S100 further comprises changing/updating the temporarily updated S108 MRM configuration back to the nominal MRM configuration in response to the vehicle passing the UUODD exit area.

In some embodiments, the controlling S103 of the vehicle is performed prior to the vehicle entering the UUODD exit area. In some embodiments, the controlling S103 of the vehicle is performed during a defined time-window immediately preceding a subsequent time window when the vehicle is expected to traverse the UUODD exit area. In other words, the controlling S103 of the vehicle may be performed within the time-window preceding to the time-window that starts when the vehicle enters the UUODD exit area.

As used herein, the term "in response to X being Y" may be construed to mean "if X is Y", "when X is Y", or "upon X being Y", "in response to detecting X being Y", "in response to determining X being Y", or "in response to receiving a signal indicating that X is Y" depending on the context. Accordingly, the term "in response to the ADS function being currently active" may be construed as "in response to detecting and identifying that the ADS function is active" or "in response to receiving a signal indicating that the ADS function is active". Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

Executable instructions for performing these functions are, optionally, included in a non-transitory computer-readable storage medium or other computer program product configured for execution by one or more processors.

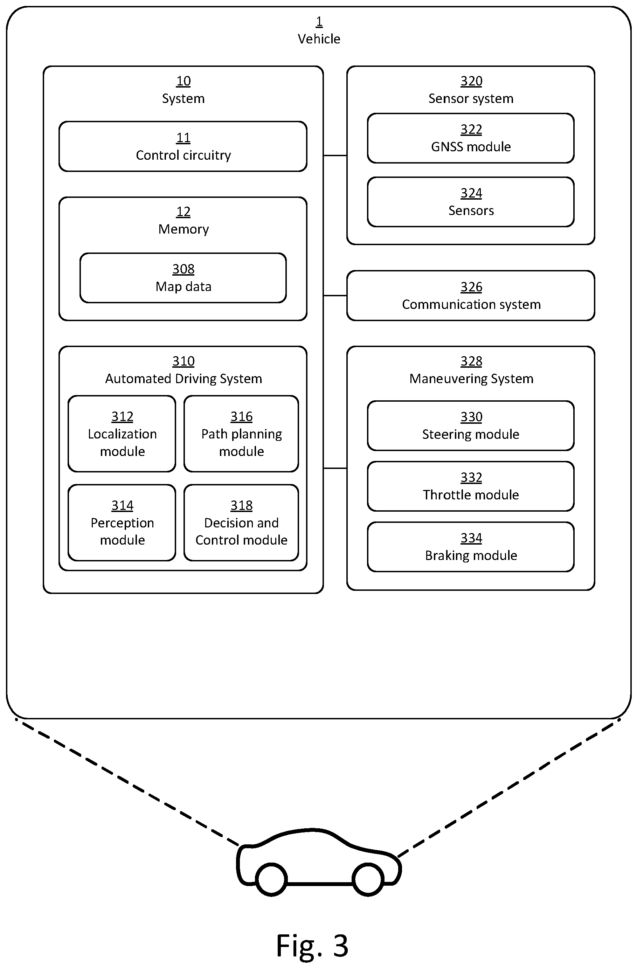

Fig. 2 is a schematic top-view illustration of a road scenario for a vehicle travelling along a route in accordance with some embodiments. In particular, Fig. 2 is a schematic top-view illustration of a road scenario where the present invention may be applied in accordance with some embodiments. The following description will also be made in reference to Fig. 3 showing a schematic diagram of a vehicle 1 comprising a system 10 for precautionary planning for a vehicle 1 in accordance with some embodiments.

The road scenario depicts a vehicle 1 comprising an ADS function having an ODD, where the vehicle 1 is travelling along a route as shown with a dashed arrow in front of the vehicle 1. The vehicle 1 comprises a system 10 with control circuitry 11 configured to obtain data comprising information about a high-risk state 21 for the vehicle 1 along the route to be travelled by the vehicle 1.

The high-risk state is defined based on a geographical area 23 along the route to be travelled and a set of potential states 24 of the vehicle 1 within the geographical area 21. For example, it may be assumed that, based on an execution of an MRM, the vehicle 1 will be brought to standstill within some defined geographical area. However, bringing the vehicle 1 to a standstill state at certain positions on the road may result in an elevated risk of accidents with other road users 30. Accordingly, by identifying a geographical area 21 within which certain vehicle states 24 may result in an elevated risk exposure for the vehicle and/or other road users, a high-risk state may be determined.

In more detail, high risk state 21 may be heuristically determined based on map data and a set of predefined rules. For example, the predefined rules may include that geographical areas 21 of the high-risk state 21 may be areas close to a merge to the highway, an exit from the highway, or with areas close to temporary road closes (i.e., areas around temporary lane mergers). The geographical areas 23 of a high-risk state 21 may be directly indicated and defined in the map data, e.g., as a layer in a HD-map. Accordingly, in response to obtaining map data indicating that the vehicle 1 is approaching to a geographical area 23 of a high-risk state 21, a high-risk state 21 may be determined. As mentioned, the geographical area 21 may be a pre-defined geographical area 21 indicated an HD map 308 accessible by the control circuitry 11. However, in some embodiments, the control circuitry 11 may be simply determine a high-risk state along a route to be travelled by the vehicle based on map data and a set of predefined rules. In other words, the map data may simply indicate that a lane merger is approaching, whereupon the control circuitry 11 is configured to define a high-risk state associated with the lane merger.

Further, once the information about the high-risk state 21 is obtained, the control circuitry 11 is configured to obtain data comprising information about the Unplanned Undesired ODD (UUODD) exit area 22 along the route to be travelled by the vehicle 1. The UUODD exit area is defined based on a likelihood that the vehicle will enter the high-risk state in response to the MRM being executed while the vehicle is in the UUODD exit area 22. The control circuitry 11 may be configured to compute or otherwise determine the UUODD exit area given the high-risk state 21, the current trajectory of the vehicle 1, and the MRM configuration, using a vehicle motion model.

In more detail, a vehicle motion model serves as a mathematical representation of a vehicle's movement. In general, a vehicle motion model aims to simulate/predict how the vehicle will move based on its current state, inputs (such as steering, acceleration, and braking), and environmental factors like road conditions, traffic, and obstacles. The vehicle motion model may comprise a kinematic model describing the vehicle's motion in terms of position, velocity, and acceleration without considering forces causing the motion. Further, the vehicle motion model may comprise a dynamic model that considers the forces and torques acting on the vehicle, including factors such as tire-road interaction, suspension dynamics, aerodynamics, and vehicle mass distribution. The vehicle motion model may further comprise a state estimation that involves the current state of the vehicle (position, velocity, orientation, etc.) using sensor data like GPS, IMU (Inertial Measurement Unit), wheel encoders, cameras, lidar, and radar.

The control circuitry 11 is further configured to control the vehicle 1 based on the UUODD exit area 22 in order to reduce the likelihood that the vehicle 1 enters the high-risk state 21. In other words, once the UUODD exit area 22 is known, the system 10 can perform some precautionary measures to reduce the risk of the vehicle 1 ending up in the high-risk state 21, in the event that an unplanned ODD exit would occur within the UUODD exit area 22.

The controlling of the vehicle 1 may be performed prior to the vehicle 1 entering the UUODD exit area 22. In some embodiments, the controlling of the vehicle is performed during a defined time-window immediately preceding a subsequent time window when the vehicle is expected to traverse the UUODD exit area 22. This time-window is schematically indicated as an area 20 preceding the UUODD exit area 22. This serves to further elucidate the "precautionary planning" aspect of the embodiments disclosed herein where the measures to reduce risk and thereby increase safety are performed prior to any adverse event occurring rather than as a reaction to an adverse event occurring.

Further, the control circuitry 11 may be configured to perform the controlling of the vehicle within a precautionary planning area 20 positioned before UUODD exit area 22. The precautionary planning area 20 may for example be based on a time-window which spans from the current moment in time to k time steps ahead (a time step may be defined as a fraction of a second or a second). The value of the parameter k may be based on vehicle capabilities, vehicle states, the road and weather conditions. In other words, the value of the parameter k may depend on how easy to control the vehicle safely and comfortably.

In some embodiments, the control circuitry 11 the control circuitry is configured to control the vehicle (in order to reduce the likelihood that the vehicle enters or ends up in the high-risk state) in various ways. Moreover, the controlling of the vehicle may depend on whether or not the ADS function is active or not.

In more detail, the controlling of the vehicle 1 may comprise that the control circuitry 11 is configured to, in response to the ADS function being currently inactive, inhibiting activation of the ADS function within the UUODD exit area 22. Thereby the ADS function cannot be activated within the UUODD exit area as it would not give any time to perform any precautionary planning as described herein.

Further, the controlling of the vehicle 1 may comprise that the control circuitry 11 is configured to, in response to the ADS function being currently active, updating a trajectory of the vehicle 1. Accordingly, since the ADS function is active, precautionary planning may be performed prior to entering the UUODD exit area. Thus, in some embodiments, the precautionary planning comprises updating or otherwise switching a trajectory of the vehicle (from its current trajectory) in order to to reduce the likelihood that the vehicle 1 enters the high-risk state 21 should the MRM be executed while the vehicle is in the UUODD exit area 22.

Moreover, the updating of a trajectory of the vehicle 1 may comprise controlling a lateral motion of the vehicle 1 and/or a speed of the vehicle 1 in order to reduce the likelihood that the vehicle 1 enters the high-risk state 21 should the MRM be executed while the vehicle is in the UUODD exit area 22. For example, the control of a lateral motion of the vehicle may comprise switching to an adjacent lane. Thereby, the UUODD exit area 22 could be avoided completely, and the risk of the vehicle ending up in the high-risk state 21 effectively reduced. The speed adjustment may be applied while the vehicle 1 is traversing the UUODD exit area 22.

Moreover, in some embodiments, the controlling of the vehicle 1 may comprise that the control circuitry 11 is configured to, in response to the ADS function being currently active, temporarily updating the MRM configuration to a different configuration than the nominal MRM configuration in order to reduce the likelihood that the vehicle 1 enters the high-risk state 21 should the MRM be executed while the vehicle is in the UUODD exit area 22. The MRM configuration may accordingly be returned to its nominal configuration once the vehicle has passed the UUODD exit area. It goes without saying that these variants of "controlling the vehicle" while the ADS function is active may be combined in various ways. For example, adjusting a speed of the vehicle and the re-configuration of the MRM from the nominal configuration may result in that smaller adjustments of the speed and smaller adjustments of the MRM configuration may suffice as compared to only performing one of the two.

Further, Fig. 3 is a schematic illustration of an ADS-equipped vehicle 1 comprising a system 10 for precautionary planning in accordance with some embodiments. As used herein, a "vehicle" is any form of motorized transport. For example, the vehicle 1 may be any road vehicle such as a car (as illustrated herein), a motorcycle, a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the system 10 may share its control circuitry 11 with other parts of the vehicle 1 (e.g. the ADS 310). Moreover, the system 10 may form a part of the ADS 310, i.e. the system 10 may be implemented as a module or feature of the ADS.

The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral/integrated element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral/integrated elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, and/or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Maneuvering system 328 may comprise information about the nominal MRM, configuration of the vehicle 1. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320. The ADS 310 may further comprise a path planning module 316 (may also be in the form of a trajectory planning module) configured to output candidate paths (or candidate trajectories) for the ADS to execute. The candidate paths or trajectories may be provided to the decision and control module 318 of the ADS 310 for execution. Moreover, the control circuitry 11 may be configured to retrieve the current trajectory of the vehicle 1 from a trajectory planning module or path planning module 316.

The present invention has been presented above with reference to specific embodiments. However, other embodiments than the above described are possible and within the scope of the below defined claims. Different method steps than those described above, performing the method by hardware or software, may be provided within the scope of the embodiments disclosed herein. Thus, according to some embodiments, there is provided a non-transitory computer-readable storage medium storing one or more programs configured to be executed by one or more processors of a computing device, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the below defined claims. Likewise, software implementations could be accomplished with standard programming techniques with rule-based logic and other logic to accomplish the various obtaining steps, controlling steps, inhibiting steps and updating steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for precautionary planning for a vehicle having an Automated Driving System, ADS, function having an Operational Design Domain, ODD, the method comprising:
obtaining (S101) data comprising information about a high-risk state for the vehicle along a route to be travelled by the vehicle, wherein the high-risk state is defined based on a geographical area along the route to be travelled and a set of potential states of the vehicle within the geographical area;
**characterized in that** the method (S100) comprises:
obtaining (S102) data comprising information about an Undesired Unexpected ODD, UUODD, exit area along the route to be travelled by the vehicle based on a current trajectory of the vehicle and a nominal Minimal Risk Maneuver, MRM, configuration of the vehicle, wherein the UUODD exit area is defined based on a likelihood that the vehicle will enter the high-risk state in response to the MRM being executed while the vehicle is in the UUODD exit area; and
controlling (S103) the vehicle based on the UUODD exit area in order to reduce the likelihood that the vehicle enters the high-risk state.

2. The method (S100) according to claim 1, wherein controlling (S103) the vehicle comprises:
in response to the ADS function being currently inactive, inhibiting (S104) activation of the ADS function within the UUODD exit area.

3. The method (S100) according to claim 1, wherein controlling (S103) the vehicle comprises:
in response to the ADS function being currently active, updating (S105) the trajectory of the vehicle in order to reduce the likelihood that the vehicle enters the high-risk state should the MRM be executed while the vehicle is in the UUODD exit area.

4. The method (S100) according to claim 3, wherein updating (S105) a trajectory of the vehicle comprises:
controlling (S106) a lateral motion of the vehicle in order to reduce the likelihood that the vehicle enters the high-risk state should the MRM be executed while the vehicle is in the UUODD exit area.

5. The method (S100) according to any one of claims 3-4, wherein updating (S105) a trajectory of the vehicle comprises:
controlling (S107) a speed of the vehicle in order to reduce the likelihood that the vehicle enters the high-risk state should the MRM be executed while the vehicle is in the UUODD exit area.

6. The method (S100) according to claim 1, wherein controlling (S103) the vehicle comprises:
in response to the ADS function being currently active, temporarily updating (S108) the MRM configuration to a different configuration than the nominal MRM configuration in order to reduce the likelihood that the vehicle enters the high-risk state should the MRM be executed while the vehicle is in the UUODD exit area.

7. The method (S100) according to any one of claims 1-6, wherein the geographical area is a pre-defined geographical area on a digital map accessible by the ADS function.

8. The method (S100) according to any one of claims 1-7, wherein the controlling (S103) of the vehicle is performed prior to the vehicle entering the UUODD exit area.

9. The method (S100) according to claim 8, wherein the controlling (S103) of the vehicle is performed during a defined time-window immediately preceding a subsequent time window when the vehicle is expected to traverse the UUODD exit area.

10. A computer program product comprising instructions which, when the program is executed by a computing device, causes the computing device to carry out the method (S100) according to any one of claims 1-9.

11. A computer-readable storage medium comprising instructions which, when executed by a computing device, causes the computing device to carry out the method (S100) according to any one of claims 1-9.

12. A system (10) for precautionary planning for a vehicle (1) having an Automated Driving System, ADS, function having an Operational Design Domain, ODD, the system (10) comprising control circuitry (11) configured to:
obtain data comprising information about a high-risk state (21) for the vehicle (1) along a route to be travelled by the vehicle, wherein the high-risk state is defined based on a geographical area (23) along the route to be travelled and a set of potential states (24) of the vehicle within the geographical area (23);
**characterized in that** the control circuitry (11) is configured to:
obtain data comprising information about an Undesired Unexpected ODD, UUODD, exit area (22) along the route to be travelled by the vehicle (1) based on a current trajectory of the vehicle and a nominal Minimal Risk Maneuver, MRM, configuration of the vehicle, wherein the unplanned ODD exit area (22) is defined based on a likelihood that the vehicle will enter the high-risk state (21) in response to the MRM being executed while the vehicle is in the UUODD exit area; and
control the vehicle (1) based on the UUODD exit area (22) in order to reduce the likelihood that the vehicle (1) enters the high-risk state (21).

13. The system (10) according to claim 12, wherein control circuitry (11) is configured to control the vehicle (1) by:
in response to the ADS function being currently inactive, inhibiting activation of the ADS function within the UUODD exit area (22).

14. The system (10) according to claim 12, wherein control circuitry (11) is configured to control the vehicle (1) by:
in response to the ADS function being currently active, updating a trajectory of the vehicle in order to reduce the likelihood that the vehicle enters the high-risk state (21) should the MRM be executed while the vehicle is in the UUODD exit area (22).

15. A vehicle (1) comprising:
a system (10) according to any one of claims 12-14.

## Patentansprüche

1. Computerimplementiertes Verfahren (S100) zur vorausschauenden Planung für ein Fahrzeug, das eine Funktion eines automatisierten Fahrsystems, ADS, aufweist, die eine Betriebsdesigndomäne, ODD, aufweist, wobei das Verfahren Folgendes umfasst:
Erhalten (S101) von Daten, die Informationen über einen Hochrisikozustand für das Fahrzeug entlang einer Route, die durch das Fahrzeug zu fahren ist, umfassen, wobei der Hochrisikozustand basierend auf einem geographischen Bereich entlang der Route, die zu fahren ist, und einem Satz von potentiellen Zuständen des Fahrzeugs innerhalb des geographischen Bereichs definiert ist;
**dadurch gekennzeichnet, dass** das Verfahren (S100) Folgendes umfasst:
Erhalten (S102) von Daten, die Informationen über einen unerwünschten unerwarteten ODD-Austrittsbereich, UUODD-Austrittsbereich entlang der Route, die durch das Fahrzeug zu fahren ist, basierend auf einer aktuellen Trajektorie des Fahrzeugs und einer nominalen Mindestrisikomanöver-Konfiguration, MRM-Konfiguration, des Fahrzeugs umfassen, wobei der UUODD-Austrittsbereich basierend auf einer Wahrscheinlichkeit definiert ist, dass das Fahrzeug als Reaktion darauf in den Hochrisikozustand eintreten wird, dass das MRM ausgeführt wird, während sich das Fahrzeug in dem UUODD-Austrittsbereich befindet; und
Steuern (S103) des Fahrzeugs basierend auf dem UUODD-Austrittsbereich, um die Wahrscheinlichkeit, dass das Fahrzeug in den Hochrisikozustand eintritt, zu reduzieren.

2. Verfahren (S100) nach Anspruch 1, wobei das Steuern (S103) des Fahrzeugs Folgendes umfasst:
als Reaktion darauf, dass die ADS-Funktion aktuell inaktiv ist, Hemmen (S104) einer Aktivierung der ADS-Funktion innerhalb des UUODD-Austrittsbereichs.

3. Verfahren (S100) nach Anspruch 1, wobei das Steuern (S103) des Fahrzeugs Folgendes umfasst:
als Reaktion darauf, dass die ADS-Funktion aktuell aktiv ist, Aktualisieren (S105) der Trajektorie des Fahrzeugs, um die Wahrscheinlichkeit, dass das Fahrzeug in den Hochrisikozustand eintritt, zu reduzieren, falls das MRM ausgeführt wird, während sich das Fahrzeug in dem UUODD-Austrittsbereich befindet.

4. Verfahren (S100) nach Anspruch 3, wobei das Aktualisieren (S105) einer Trajektorie des Fahrzeugs Folgendes umfasst:
Steuern (S106) einer lateralen Bewegung des Fahrzeugs, um die Wahrscheinlichkeit, dass das Fahrzeug in den Hochrisikozustand eintritt, zu reduzieren, falls das MRM ausgeführt wird, während sich das Fahrzeug in dem UUODD-Austrittsbereich befindet.

5. Verfahren (S100) nach einem der Ansprüche 3-4, wobei das Aktualisieren (S105) einer Trajektorie des Fahrzeugs Folgendes umfasst:
Steuern (S107) einer Geschwindigkeit des Fahrzeugs, um die Wahrscheinlichkeit, dass das Fahrzeug in den Hochrisikozustand eintritt, zu reduzieren, falls das MRM ausgeführt wird, während sich das Fahrzeug in dem UUODD-Austrittsbereich befindet.

6. Verfahren (S100) nach Anspruch 1, wobei das Steuern (S103) des Fahrzeugs Folgendes umfasst:
als Reaktion darauf, dass die ADS-Funktion aktuell aktiv ist, temporäres Aktualisieren (S108) der MRM-Konfiguration auf eine andere Konfiguration als die nominale MRM-Konfiguration, um die Wahrscheinlichkeit, dass das Fahrzeug in den Hochrisikozustand eintritt, zu reduzieren, falls das MRM ausgeführt wird, während sich das Fahrzeug in dem UUODD-Austrittsbereich befindet.

7. Verfahren (S100) nach einem der Ansprüche 1-6, wobei der geographische Bereich ein vordefinierter geographischer Bereich auf einer digitalen Karte ist, auf die die ADS-Funktion zugreifen kann.

8. Verfahren (S100) nach einem der Ansprüche 1-7, wobei das Steuern (S103) des Fahrzeugs durchgeführt wird, bevor das Fahrzeug in den UUODD-Austrittsbereich eintritt.

9. Verfahren (S100) nach Anspruch 8, wobei das Steuern (S103) des Fahrzeugs während eines definierten Zeitfensters unmittelbar vor einem anschließenden Zeitfenster, wenn erwartet wird, dass das Fahrzeug den UUODD-Austrittsbereich durchquert, durchgeführt wird.

10. Computerprogrammprodukt, umfassend Anweisungen, die, wenn das Programm durch eine Rechenvorrichtung ausgeführt wird, die Rechenvorrichtung dazu veranlassen, das Verfahren (S100) nach einem der Ansprüche 1-9 durchzuführen.

11. Computerlesbares Speichermedium, umfassend Anweisungen, die, wenn durch eine Rechenvorrichtung ausgeführt, die Rechenvorrichtung dazu veranlassen, das Verfahren (S100) nach einem der Ansprüche 1-9 durchzuführen.

12. System (10) zur vorausschauenden Planung für ein Fahrzeug (1), das eine Funktion eines automatisierten Fahrsystems, ADS, aufweist, die eine Betriebsdesigndomäne, ODD, aufweist, wobei das System (10) eine Steuerschaltung (11) umfasst, die zu Folgendem konfiguriert ist:
Erhalten von Daten, die Informationen über einen Hochrisikozustand (21) für das Fahrzeug (1) entlang einer Route, die durch das Fahrzeug zu fahren ist, umfassen, wobei der Hochrisikozustand basierend auf einem geographischen Bereich (23) entlang der Route, die zu fahren ist, und einem Satz von potentiellen Zuständen (24) des Fahrzeugs innerhalb des geographischen Bereichs (23) definiert ist;
**dadurch gekennzeichnet, dass** die Steuerschaltung (11) zu Folgendem konfiguriert ist:
Erhalten von Daten, die Informationen über einen unerwünschten unerwarteten ODD-Austrittsbereich, UUODD-Austrittsbereich (22), entlang der Route, die durch das Fahrzeug (1) zu fahren ist, basierend auf einer aktuellen Trajektorie des Fahrzeugs und einer nominalen Mindestrisikomanöver-Konfiguration, MRM-Konfiguration, des Fahrzeugs umfassen, wobei der ungeplante ODD-Austrittsbereich (22) basierend auf einer Wahrscheinlichkeit definiert ist, dass das Fahrzeug als Reaktion darauf in den Hochrisikozustand (21) eintreten wird, dass das MRM ausgeführt wird, während sich das Fahrzeug in dem UUODD-Austrittsbereich befindet; und
Steuern des Fahrzeugs (1) basierend auf dem UUODD-Austrittsbereich (22), um die Wahrscheinlichkeit, dass das Fahrzeug (1) in den Hochrisikozustand (21) eintritt, zu reduzieren.

13. System (10) nach Anspruch 12, wobei die Steuerschaltung (11) dazu konfiguriert ist, das Fahrzeug (1) durch Folgendes zu steuern:
als Reaktion darauf, dass die ADS-Funktion aktuell inaktiv ist, Hemmen einer Aktivierung der ADS-Funktion innerhalb des UUODD-Austrittsbereichs (22).

14. System (10) nach Anspruch 12, wobei die Steuerschaltung (11) dazu konfiguriert ist, das Fahrzeug (1) durch Folgendes zu steuern:
als Reaktion darauf, dass die ADS-Funktion aktuell aktiv ist, Aktualisieren einer Trajektorie des Fahrzeugs, um die Wahrscheinlichkeit, dass das Fahrzeug in den Hochrisikozustand (21) eintritt, zu reduzieren, falls das MRM ausgeführt wird, während sich das Fahrzeug in dem UUODD-Austrittsbereich (22) befindet.

15. Fahrzeug (1), umfassend:
ein System (10) nach einem der Ansprüche 12-14.

## Revendications

1. Procédé (S100) mis en œuvre par ordinateur pour la planification de mesures pour un véhicule ayant une fonction de système de conduite automatisé, ADS, ayant un domaine de conception opérationnel, ODD, le procédé comprenant :
l'obtention (S101) de données comprenant des informations concernant un état à haut risque pour le véhicule le long d'un itinéraire devant être parcouru par le véhicule, dans lequel l'état à haut risque est défini sur la base d'une zone géographique le long de l'itinéraire devant être parcouru et d'un ensemble d'états potentiels du véhicule à l'intérieur de la zone géographique ;
**caractérisé en ce que** le procédé (S100) comprend :
l'obtention (S102) de données comprenant des informations concernant une zone de sortie d'ODD imprévue et indésirée, UUODD, le long d'un itinéraire devant être parcouru par le véhicule sur la base d'une trajectoire actuelle du véhicule et d'une configuration nominale de manœuvre de risque minimal, MRM, du véhicule, dans lequel la zone de sortie d'UUODD est définie sur la base d'une probabilité que le véhicule entre dans l'état à haut risque en réponse à l'exécution de la MRM alors que le véhicule se trouve dans la zone de sortie d'UUODD ; et
la commande (S103) du véhicule sur la base de la zone de sortie d'UUODD afin de réduire la probabilité que le véhicule entre dans l'état à haut risque.

2. Procédé (S100) selon la revendication 1, dans lequel la commande (S103) du véhicule comprend :
en réponse au fait que la fonction d'ADS est actuellement inactive, l'inhibition (S104) de l'activation de la fonction d'ADS à l'intérieur de la zone de sortie d'UUODD.

3. Procédé (S100) selon la revendication 1, dans lequel la commande (S103) du véhicule comprend :
en réponse au fait que la fonction d'ADS est actuellement active, la mise à jour (S105) de la trajectoire du véhicule afin de réduire la probabilité que le véhicule entre dans l'état à haut risque si la MRM devait être exécutée alors que le véhicule se trouve dans la zone de sortie d'UUODD.

4. Procédé (S100) selon la revendication 3, dans lequel la mise à jour (S105) d'une trajectoire du véhicule comprend :
la commande (S106) d'un mouvement latéral du véhicule afin de réduire la probabilité que le véhicule entre dans l'état à haut risque si la MRM devait être exécutée alors que le véhicule se trouve dans la zone de sortie d'UUODD.

5. Procédé (S100) selon l'une quelconque des revendications 3 à 4, dans lequel la mise à jour (S105) d'une trajectoire du véhicule comprend :
la commande (S107) d'une vitesse du véhicule afin de réduire la probabilité que le véhicule entre dans l'état à haut risque si la MRM devait être exécutée alors que le véhicule se trouve dans la zone de sortie d'UUODD.

6. Procédé (S100) selon la revendication 1, dans lequel la commande (S103) du véhicule comprend :
en réponse au fait que la fonction d'ADS est actuellement active, la mise à jour temporaire (S108) de la configuration de MRM vers une configuration différente de la configuration nominale de MRM afin de réduire la probabilité que le véhicule entre dans l'état à haut risque si la MRM devait être exécutée alors que le véhicule se trouve dans la zone de sortie d'UUODD.

7. Procédé (S100) selon l'une quelconque des revendications 1 à 6, dans lequel la zone géographique est une zone géographique prédéfinie sur une carte numérique accessible par la fonction d'ADS.

8. Procédé (S100) selon l'une quelconque des revendications 1 à 7, dans lequel la commande (S103) du véhicule est réalisée avant que le véhicule n'entre dans la zone de sortie d'UUODD.

9. Procédé (S100) selon la revendication 8, dans lequel la commande (S103) du véhicule est réalisée pendant une fenêtre temporelle définie précédant immédiatement une fenêtre temporelle subséquente lors de laquelle il est attendu que le véhicule traverse la zone de sortie d'UUODD.

10. Produit de programme informatique comprenant des instructions qui, lorsque le programme est exécuté par un dispositif informatique, amènent le dispositif informatique à réaliser le procédé (S100) selon l'une quelconque des revendications 1 à 9.

11. Support de stockage lisible par ordinateur comprenant des instructions qui, lorsqu'elles sont exécutées par un dispositif informatique, amènent le dispositif informatique à réaliser le procédé (S100) selon l'une quelconque des revendications 1 à 9.

12. Système (10) pour la planification de mesures pour un véhicule (1) ayant une fonction de système de conduite automatisé, ADS, ayant un domaine de conception opérationnel, ODD, le système (10) comprenant un circuit de commande (11) configuré pour :
obtenir des données comprenant des informations concernant un état à haut risque (21) pour le véhicule (1) le long d'un itinéraire devant être parcouru par le véhicule, dans lequel l'état à haut risque est défini sur la base d'une zone géographique (23) le long de l'itinéraire devant être parcouru et d'un ensemble d'états potentiels (24) du véhicule à l'intérieur de la zone géographique (23) ;
**caractérisé en ce que** le circuit de commande (11) est configuré pour :
obtenir des données comprenant des informations concernant une zone de sortie d'ODD imprévue et indésirée, UUODD, (22) le long d'un itinéraire devant être parcouru par le véhicule (1) sur la base d'une trajectoire actuelle du véhicule et d'une configuration nominale de manœuvre de risque minimal, MRM, du véhicule, dans lequel la zone de sortie d'ODD (22) non planifié est définie sur la base d'une probabilité que le véhicule entre dans l'état à haut risque (21) en réponse à l'exécution de la MRM alors que le véhicule se trouve dans la zone de sortie d'UUODD ; et
commander le véhicule (1) sur la base de la zone de sortie d'UUODD (22) afin de réduire la probabilité que le véhicule (1) entre dans l'état à haut risque (21).

13. Système (10) selon la revendication 12, dans lequel le circuit de commande (11) est configuré pour commander le véhicule (1) par :
en réponse au fait que la fonction d'ADS est actuellement inactive, l'inhibition de l'activation de la fonction d'ADS à l'intérieur de la zone de sortie d'UUODD (22).

14. Système (10) selon la revendication 12, dans lequel le circuit de commande (11) est configuré pour commander le véhicule (1) par :
en réponse au fait que la fonction d'ADS est actuellement active, la mise à jour d'une trajectoire du véhicule afin de réduire la probabilité que le véhicule entre dans l'état à haut risque (21) si la MRM devait être exécutée alors que le véhicule se trouve dans la zone de sortie d'UUODD (22).

15. Véhicule (1) comprenant :
un système (10) selon l'une quelconque des revendications 12 à 14.
